# EUROPÄISCHE PATENTSCHRIFT

(11) **EP 1 360 425 B1**
(45) Veröffentlichungstag und Bekanntmachung des Hinweises auf die Patenterteilung: **05.08.2009**
(21) Anmeldenummer: 02715438.4
(22) Anmeldetag: 16.01.2002
(51) Int. Cl.: F16D 3/38

(54) **FLANSCHMITNEHMER**
FLANGE DRIVER
ENTRAINEUR A BRIDE

(30) Priorität: 16.02.2001 DE 10107307
(43) Veröffentlichungstag der Anmeldung: 12.11.2003
(73) Patentinhaber: Spicer Gelenkwellenbau GmbH, 45143 Essen (DE)
(72) Erfinder: ERLMANN, Nikolaus, Martin, 40213 Düsseldorf (DE)
(74) Vertreter: Müller, Thomas Michael
(86) Internationale Anmeldenummer: PCT/EP2002/000361
(87) Internationale Veröffentlichungsnummer: WO 2002/066849

(56) Entgegenhaltungen:
- DE-U- 9 315 717
- US-A- 3 465 546
- US-A- 3 589 142
- PATENT ABSTRACTS OF JAPAN vol. 015, no. 117 (M-1095), 20. März 1991 (1991-03-20) -& JP 03 009118 A (NISSAN MOTOR CO LTD), 17. Januar 1991 (1991-01-17)

## Beschreibung

Die Erfindung betrifft einen Flanschmitnehmer für Kreuzgelenke, insbesondere für Kreuzgelenke zur Übertragung hoher Drehmomente,
mit einer Längsachse,
mit einer ersten Mitnehmerhälfte und einer zweiten Mitnehmerhälfte,
- wobei die erste Mitnehmerhälfte eine erste Trennfläche aufweist, mit der die erste Mitnehmerhälfte in Anlage zu einer zweiten Trennfläche der zweiten Mitnehmerhälfte ist, und
- wobei die erste Mitnehmerhälfte eine erste Flanschplatte und die zweite Mitnehmerhälfte eine zweite Flanschplatte aufweist,
mit einer ersten Stirnfläche,
- wobei die erste Mitnehmerhälfte einen ersten Lagerabschnitt mit einer ersten Lagerbohrung aufweist und die zweite Mitnehmerhälfte einen zweiten Lagerabschnitt mit einer zweiten Lagerbohrung aufweist, die jeweils von der ersten Stirnfläche vorstehen,
- wobei die erste Lagerbohrung und die zweite Lagerbohrung auf einer gemeinsamen die Längsachse rechtwinklig schneidenden Bohrungsachse angeordnet sind,
mit einer zweiten Stirnfläche, die senkrecht zur Längsachse angeordnet ist, wobei
- die erste Mitnehmerhälfte und die zweite Mitnehmerhälfte mittels Befestigungsschrauben lösbar miteinander verbunden sind,
- die erste Mitnehmerhälfte Sacklochbohrungen mit Innengewinden oder erste Durchgangsbohrungen aufweist, die parallel zur Längsachse verlaufen und die von einer ersten Spannfläche ausgehen,
- jeder Sacklochbohrung oder jeder ersten Durchgangsbohrung eine zweite Durchgangsbohrung in der zweiten Mitnehmerhälfte zugeordnet ist, die ausgehend von einer zweiten Verbindungsfläche in eine zweite Spannfläche mündet, und
- Befestigungsschrauben ausgehend von der zweiten Verbindungsfläche durch die zweiten Durchgangsbohrungen hindurch gesteckt sind und in den Sacklochbohrungen einsitzen oder Befestigungsschrauben ausgehend von der zweiten Verbindungsfläche durch die zweiten Durchgangsbohrungen und durch die ersten Durchgangsbohrungen hindurch gesteckt sind und in Gewindekörpern einsitzen, die sich gegen die erste Stirnfläche des Flanschmitnehmers abstützen.

Einen solchen Flanschmitnehmer zeigt die JP 3-9118 A, wobei bei dieser Ausführung zwischen Zapfenkreuz und Gabeln ein Schiebemechanismus mit dämpfenden Mitteln vorgesehen ist, so daß Schwingungen gedämpft werden. Beide Mitnehmerhälften werden erst bei der Montage auf ein Anschlusselement zusammengefügt.

Die DE 93 15 717 U zeigt einen Flanschmitnehmer für ein Kardankreuzgelenk bestehend aus zwei Gabelhälften, die mittels einer formschlüssigen Verbindung miteinander verbunden sind. Die zwei Gabelhälften haben eine gemeinsame, parallel zur Längsachse liegende, ebene Stoßfläche, an der die Gabelhälften radial aneinander anliegen. Auf der der Unterseite der Flanschplatte weist der Flanschmitnehmer einen Querkeil sowie eine Zentrierbohrung auf. Eine Zentrierscheibe mit einem Zentrierbund und einer dem Querkeil entsprechenden Nut, hält die Gabelhälften formschlüssig zueinander und richtet den Flanschmitnehmer entlang der Drehachse aus.

Die DE 43 13 141 C2 zeigt einen Flanschmitnehmer für Kreuzgelenke. Der Flanschmitnehmer ist entlang einer Ebene, die entlang der Längsachse verläuft und senkrecht zu einer Bohrungsachse der Lagerbohrungen angeordnet ist, durch Stoßflächen in zwei Mitnehmerhälften geteilt. Die Stoßflächen der beiden Mitnehmerhälften sind mit zueinander komplementär ausgebildeten Verzahnungen versehen, deren Zähne im rechten Winkel zur Längsachse verlaufen. An einer den Lagerabschnitten abgewandten Stirnseite weisen die Mitnehmerhälften eine Hirth-Stirnverzahnung auf, mit der die Mitnehmerhälften separat mit einem Gegenflansch einer Welle verbindbar sind. Hierzu weisen die Mitnehmerhälften Durchgangsbohrungen zum Hindurchführen von Verbindungsschrauben auf. Von den Verzahnungen lassen sich nur Kippkräfte aufnehmen. Querkräfte senkrecht zur Längsachse können jedoch zu Verschiebungen der Mitnehmerhälften führen.

Die EP 0 206 026 A1 zeigt ebenfalls einen in zwei Mitnehmerhälften geteilten Flanschmitnehmer. Die Mitnehmerhälften weisen Stoßflächen auf, die auf einer Ebene liegen, welche entlang einer Längsachse des Flanschmitnehmers verläuft und senkrecht zur jeweiligen Bohrungsachse der Mitnehmerhälfte angeordnet ist. Die Stoßflächen der beiden Mitnehmerhälften weisen jeweils gegengleiche Nuten auf, die parallel zur Längsachse verlaufen. In jeweils einer Nut der einen Mitnehmerhälfte und einer Gegennut der anderen Mitnehmerhälfte sitzt ein Paßstück ein, welches Querkräfte, die rechtwinklig zur Längsachse angreifen, aufnehmen. Die Mitnehmerhälften werden mittels einer Schraube, die rechtwinklig zur Längsachse verläuft, miteinander verschraubt. Der Flanschmitnehmer ist mit einem Gegenflansch einer Welle mittels Verbindungsschrauben verbindbar.

Die DE 26 36 752 A1 offenbart ein Kreuzgelenk mit zwei Gelenkgabeln, die über ein Zapfenkreuz miteinander verbunden sind. Das Zapfenkreuz umfaßt vier Zapfen, die paarweise auf einer gemeinsamen Zapfenachse liegen, wobei sich die Zapfenachsen zweier Paare rechtwinklig schneiden. Die Gelenkgabeln umfassen jeweils zwei Lagerelemente, in denen jeweils eine Lagerbohrung zur Aufnahme eines Zapfens des Zapfenkreuzes vorgesehen ist. Die Lagerelemente einer Gelenkgabel sind mittels Befestigungsschrauben mit einem Gegenflansch verbunden. Die Lagerelemente weisen hierzu jeweils zwei parallel zu einer Längsachse der Gelenkgabel verlaufende Durchgangsbohrungen auf. Im Gegenflansch sind Gewindebohrungen vorgesehen, in denen die durch die Durchgangsbohrungen geführten Befestigungsschrauben einsitzen. Die Querschnittsfläche der Lagerelemente in der Ebene, die durch das Zapfenkreuz aufgespannt ist, ist aufgrund der Durchgangsbohrungen im Vergleich zu einer ungeteilten Gelenkgabel geschwächt. Dies führt dazu, dass das maximal übertragbare Drehmoment geringer ist. Um die gleiche Drehmomentübertragungsfähigkeit wie bei ungeteilten Gelenkgabeln zu erzielen, müssen die Lagerelemente größer ausgeführt werden, wodurch der Rotationsdurchmesser des Kreuzgelenkes vergrößert wäre.

Aufgabe der vorliegenden Erfindung ist es, einen eingangs genannten Flanschmitnehmer für Kreuzgelenke vorzuschlagen, der bei geteilter Flanschmitnehmerausführung eine möglichst hohe Drehmomentübertragung ermöglicht, einfach aufgebaut und vormontierbar ist.

Die Aufgabe wird erfindungsgemäß mit den Merkmalen des Anspruchs 1 gelöst.

Somit wird erzielt, dass die Querschnitte des ersten Lagerabschnitts und des zweiten Lagerabschnitts in der Ebene, die durch die Zapfen eines Zapfenkreuzes eines Kreuzgelenkes aufgespannt ist, nicht zusätzlich durch Bohrungen für Befestigungsschrauben geschwächt ist. Zudem sind keine Auflageflächen an den Seiten der Lagerabschnitte, die der Flanschplatte entfernt angeordnet sind, vorzusehen. Es wird vermieden, dass Schraubenköpfe an dem der Flanschplatte abgewandten Ende der Lagerabschnitte mit Bauteilen des anderen Flanschmitnehmers des Kreuzgelenkes bei größeren Beugewinkeln kollidieren. Ferner ist der Flanschmitnehmer vormontierbar, wobei aufgrund der Vormontierbarkeit Kippkräfte zwischen den beiden Mitnehmerhälften durch die Spannflächen und die Befestigungsschrauben aufgenommen werden und die Befestigungsschrauben nur auf Zug belastet werden.

Um Torsionsspannungen in den Befestigungsschrauben zu vermeiden, können die Befestigungsschrauben in Form von Dehnschrauben gestaltet sein.

Vorzugsweise weisen die Befestigungsschrauben Schraubenenden auf, die in der Verbindungsfläche versenkt aufgenommen sind.

Als zusätzliche Befestigungsmittel kann vorgesehen sein, dass in der ersten Mitnehmerhälfte Sacklochbohrungen mit Innengewinde vorgesehen sind, die parallel zur Bohrungsachse verlaufen und die von der ersten Trennfläche ausgehen, dass jeder Sacklochbohrung eine Durchgangsbohrung in der zweiten Mitnehmerhälfte zugeordnet ist, die parallel zur Bohrungsachse verläuft und die von einen Außenumfangsfläche der zweiten Mitnehmerhälfte ausgehend in die zweite Trennfläche mündet, wobei Befestigungsschrauben durch die Durchgangsbohrungen hindurch gesteckt sind und in den Sacklochbohrungen einsitzen.

Vorzugsweise weisen die erste Stützfläche und die zweite Stützfläche Mittel zum Übertragen von Kräften in der Ebene der Stützflächen auf. Diese können dadurch gebildet sein, dass die erste Stützfläche und die zweite Stützfläche jeweils eine Verzahnung aufweisen, die zueinander komplementär ausgebildet sind. Die Zähne der Verzahnung der ersten Stützfläche und die Zähne der Verzahnung der zweiten Stützfläche verlaufen vorzugsweise parallel zur Längsachse. Andere Winkel zur Längsachse sind jedoch ebenso möglich. Ebenso können die erste Stoßfläche und die zweite Stoßfläche Mittel zum Übertragen von Kräften zum Beispiel in Form von Verzahnungen aufweisen.

Um Kräfte in der Ebene der ersten Spannfläche und der zweiten Spannfläche übertragen zu können, weisen diese Mittel zum Übertragen von Kräften auf. Die Mittel können dadurch gebildet sein, daß die erste Spannfläche und die zweite Spannfläche jeweils eine Verzahnung aufweisen, die zueinander komplementär ausgebildet sind.

Um Querkräfte aufzunehmen, kann auch vorgesehen sein, dass in der ersten Verbindungsfläche eine Nut vorgesehen ist, die mit einer entsprechenden Nut in der zweiten Verbindungsfläche fluchtet, dass die Nuten parallel zu der Bohrungsachse verlaufen und dass in den Nuten ein Querkeil einsitzt.

Um den Flanschmitnehmer gegenüber einer Längsachse eines Gegenflansches zu zentrieren, kann vorgesehen sein, dass die erste Verbindungsfläche und die zweite Verbindungsfläche jeweils mit Zentriermitteln zum Zentrieren des Flanschmitnehmers gegenüber einer Längsachse des Gegenflansches aufweist. Vorzugsweise sind die Zentriermittel durch Hirth-Stirnverzahnungen dargestellt.

Zum Verbinden des Flanschmitnehmers mit einem Gegenflansch sind Sacklochbohrungen mit Innengewinden vorgesehen, die jeweils von der ersten Verbindungsfläche oder von der zweiten Verbindungsfläche ausgehen und parallel zur Längsachse verlaufen. Die Verbindüngsschrauben sitzen in den Sacklochbohrungen ein.

Ebenso kann vorgesehen sein, dass ausgehend von der ersten Verbindungsfläche und ausgehend von der zweiten Verbindungsfläche Durchgangsbohrungen vorgesehen sind, die parallel zur Längsachse verlaufen und durch die Verbindungsschrauben durchgeführt werden können. In diesem Fall sind die Verbindungsschrauben durch Muttern am Flanschmitnehmer gesichert.

Bevorzugte Ausführungsbeispiele sind anhand der Zeichnungen näher erläutern.

Hierin zeigt
- Figur 1: einen erfindungsgemäßen Flanschmitnehmer mit einem durchgehenden Rücksprung an der ersten Mitnehmerhälfte und einem durchgehenden Vorsprung an der zweiten Mitnehmerhälfte in einer Explosionsdarstellung,
- Figur 2: einen Flanschmitnehmer gemäß Figur 1 in einer perspektivischen Ansicht,
- Figur 3: einen Flanschmitnehmer in einer Explosionsdarstellung, wobei sich der Rücksprung und der Vorsprung nicht über den gesamten Durchmesser des Flanschmitnehmers erstrecken,
- Figur 4: eine erste Mitnehmerhälfte mit zwei Rücksprüngen,
- Figur 5: eine zweite Mitnehmerhälfte mit zwei Vorsprüngen,
- Figur 6: einen Flanschmitnehmer in einer Explosionsdarstellung, wobei die erste Mitnehmerhälfte einen durchgehenden Rücksprung und die zweite Mitnehmerhälfte einen durchgehenden Vorsprung aufweisen, mit Druckplatten, die als Muttern für Befestigungsschrauben dienen, und
- Figur 7: einen Flanschmitnehmer gemäß Figur 6 in einer perspektivischen Darstellung,
- Figur 8: einen Flanschmitnehmer gemäß Figur 1, wobei die erste Spannfläche und die zweite Spannfläche jeweils eine Verzahnung aufweisen.

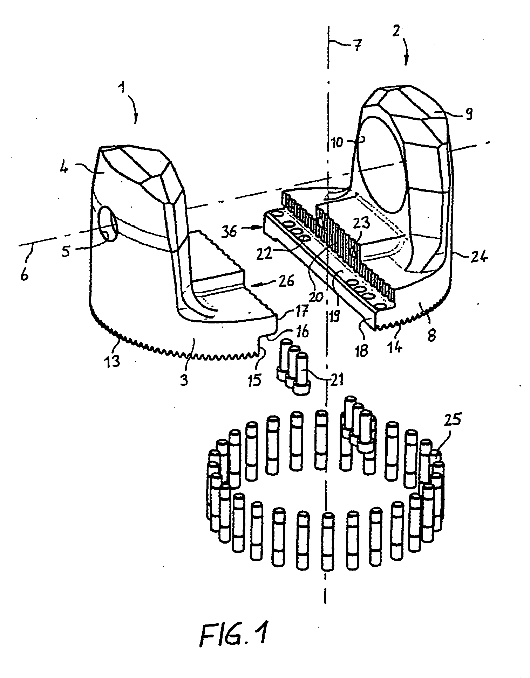

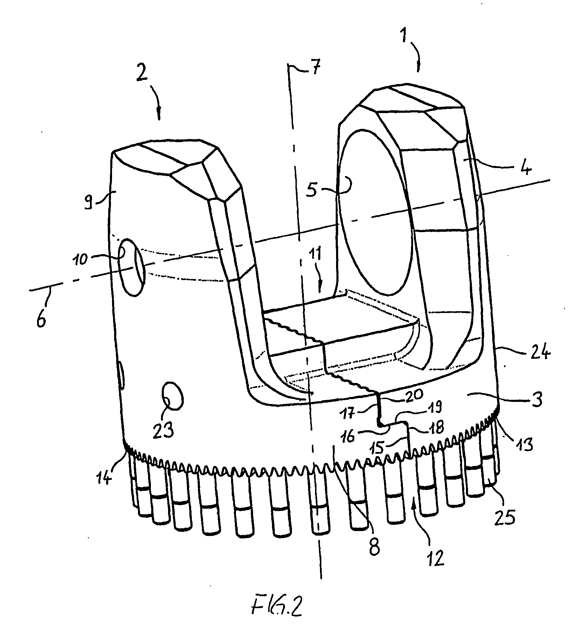

Figur 1 zeigt einen Flanschmitnehmer in einer Explosionsdarstellung, und Figur 2 zeigt diesen Flanschmitnehmer im montierten Zustand in einer perspektivischen Darstellung. Figuren 1 und 2 werden im folgenden zusammen beschrieben.

Der Flanschmitnehmer umfasst eine erste Mitnehmerhälfte 1 und eine zweite Mitnehmerhälfte 2. Die erste Mitnehmerhälfte 1 weist eine erste Flanschplatte 3 und einen einstückig mit dieser verbundenem ersten Lagerabschnitt 4 auf. Der erste Lagerabschnitt 4 weist eine erste Lagerbohrung 5 auf, die koaxial zu einer Bohrungsachse 6 angeordnet ist. Die Bohrungsachse 6 schneidet eine Längsachse 7 des Flanschmitnehmers in einem rechten Winkel.

Die zweite Mitnehmerhälfte 2 weist eine zweite Flanschplatte 8 sowie einen zweiten Lagerabschnitt 9 auf, wobei der zweite Lagerabschnitt 9 einstückig mit der zweiten Flanschplatte 8 ausgebildet ist. In dem zweiten Lagerabschnitt 9 ist eine zweite Lagerbohrung 10 vorgesehen, die koaxial zur Bohrungsachse 6 angeordnet ist. Der Flanschmitnehmer weist eine erste Stirnfläche 11 auf, die durch die erste Flanschplatte 3 und die zweite Flanschplatte 8 gebildet ist und von der der erste Lagerabschnitt 4 und der zweite Lagerabschnitt 9 vorstehen. Ferner weist der Flanschmitnehmer eine zweite Stirnfläche 12 auf, die senkrecht zur Längsachse 7 angeordnet ist und die durch eine erste Verbindungsfläche 13 und eine zweite Verbindungsfläche 14 gebildet ist. Die erste Verbindungsfläche 13 ist an der ersten Flanschplatte 3, und die zweite Verbindungsfläche 14 ist an der zweiten Flanschplatte angeordnet.

Die erste Mitnehmerhälfte 1 weist eine erste Trennfläche 26 auf, die im montierten Zustand des Flanschmitnehmers in Anlage zu einer zweiten Trennfläche 36 der zweiten Mitnehmerhälfte 2 ist. Die erste Trennfläche ist 26 ist an der Flanschplatte 3 der ersten Mitnehmerhälfte 1 angeordnet und weist einen stufenartigen Rücksprung auf, der ausgehend von der ersten Verbindungsfläche 13 von einer ersten Stoßfläche 15 einer ersten Spannfläche 16 und einer ersten Stützfläche 17 gebildet ist. Die erste Stoßfläche 15 geht von der ersten Verbindungsfläche 13 aus und verläuft parallel zur Längsachse 7. Die erste Stoßfläche 15 geht über in die erste Spannfläche 16, die die Längsachse 7 im montierten Zustand der Mitnehmerhälften 1, 2 senkrecht schneidet. Die erste Spannfläche 16 geht in die erste Stützfläche 17 über, die parallel zur Längsachse 7 verläuft und in die erste Stirnfläche 11 des Flanschmitnehmers übergeht. Der Rücksprung erstreckt sich in radialer Richtung über den gesamten Durchmesser der ersten Flanschplatte 3.

Die zweite Trennfläche 36 ist an der zweiten Flanschplatte 8 der zweiten Mitnehmerhälfte 2 angeordnet und weist einen stufenartigen Vorsprung auf, der gegengleich zum Rücksprung der ersten Flanschplatte 3 ausgebildet ist. Der Vorsprung ist durch eine zweite Stoßfläche 18, eine zweite Spannfläche 19 und eine zweite Stützfläche 20 gebildet. Die zweite Stoßfläche 18 geht von der zweiten Verbindungsfläche 14 aus und verläuft parallel zur Längsachse 7. Die zweite Spannfläche 19 geht von der zweiten Stoßfläche 18 aus und ist senkrecht zur Längsachse 7 angeordnet. Die zweite Spannfläche 19 geht in die zweite Stützfläche 20 über, die parallel zur Längsachse 7 verläuft.

Im montierten Zustand der ersten Mitnehmerhälfte 1 und der zweiten Mitnehmerhälfte 2 sind die erste Stoßfläche 15 und die zweite Stoßfläche 18, die erste Spannfläche 16 und die zweite Spannfläche 19 sowie die erste Stützfläche 17 und die zweite Stützfläche 20 miteinander in Anlage. Hierbei weisen die erste Stützfläche 17 und die zweite Stützfläche 20 jeweils eine Verzahnung auf, wobei die Verzahnung der ersten Stützfläche 17 komplementär zur Verzahnung der zweiten Stützfläche 20 ausgebildet ist. Die Zähne der Verzahnungen verlaufen parallel zur Längsachse 7.

Die erste Mitnehmerhälfte 1 und die zweite Mitnehmerhälfte 2 sind mittels Befestigungsschrauben 21 lösbar miteinander verbunden. Hierzu weist die erste Mitnehmerhälfte 1 Sacklochbohrungen (nicht dargestellt) mit Innengewinden auf, die parallel zur Längsachse 7 verlaufen und von der ersten Spannfläche 16 ausgehen. Jeder der ersten Sacklochbohrungen ist eine zweite Durchgangsbohrung 22 in der zweiten Mitnehmerhälfte 2 zugeordnet, die ausgehend von der zweiten Verbindungsfläche 14 in die zweite Spannfläche 19 mündet. Die Befestigungsschrauben 21 werden ausgehend von der zweiten Verbindungsfläche 14 durch die zweiten Durchgangsbohrungen 22 der zweiten Mitnehmerhälfte 2 gesteckt und in die Sacklochbohrungen mit Innengewinden der ersten Mitnehmerhälfte 1 eingeschraubt.

Ferner sind zum Verspannen der ersten Mitnehmerhälfte 1 mit der zweiten Mitnehmerhälfte 2 Durchgangsbohrungen 23 in der zweiten Mitnehmerhälfte 2 vorgesehen, die ausgehend von einer Außenumfangsfläche 24 in die zweite Stützfläche 20 münden und die die Längsachse 7 mit Abstand kreuzen. Jeder Durchgangsbohrung 23 in der zweiten Mitnehmerhälfte 2 ist eine Sacklochbohrung (nicht dargestellt) mit Innengewinden in der ersten Mitnehmerhälfte 1 zugeordnet, die ausgehend von der ersten Stützfläche in Verlängerung der Durchgangsbohrungen 23 verlaufen. Befestigungsschrauben (nicht dargestellt) werden ausgehend von der Außenumfangsfläche 24 durch die Durchgangsbohrungen 23 der zweiten Mitnehmerhälfte 2 hindurchgesteckt und in die Sacklochbohrungen mit Innengewinden der ersten Mitnehmerhälfte 1 eingeschraubt.

Um das Flanschelement mit einem Gegenflansch zu verbinden, sind in der ersten Verbindungsfläche 13 und der zweiten Verbindungsfläche 14 Sacklochbohrungen (nicht dargestellt) mit Innengewinden vorgesehen, die parallel zur Längsachse 7 verlaufen und gleichmäßig auf einen Umfang um die Längsachse 7 verteilt sind. In die Sacklochbohrungen mit Innengewinden werden Verbindungsschrauben 25 in Form von Stiftschrauben eingeschraubt. Die eingeschraubten Verbindungsschrauben 25 stehen über die zweite Stirnfläche des Flanschelementes vor und können durch Durchgangsbohrungen eines Gegenflansches gesteckt werden und mittels Muttern gesichert werden. Um den Flanschmitnehmer gegenüber einer Längsachse des Gegenflansches zentrieren zu können und um Mittel für die Drehmomentübertragung bereitzustellen, ist die zweite Stirnfläche 12 mit einer Hirth-Stirnverzahnung versehen, die in eine komplementäre Hirth-Stirnverzahnung des Gegenflansches eingreifen kann.

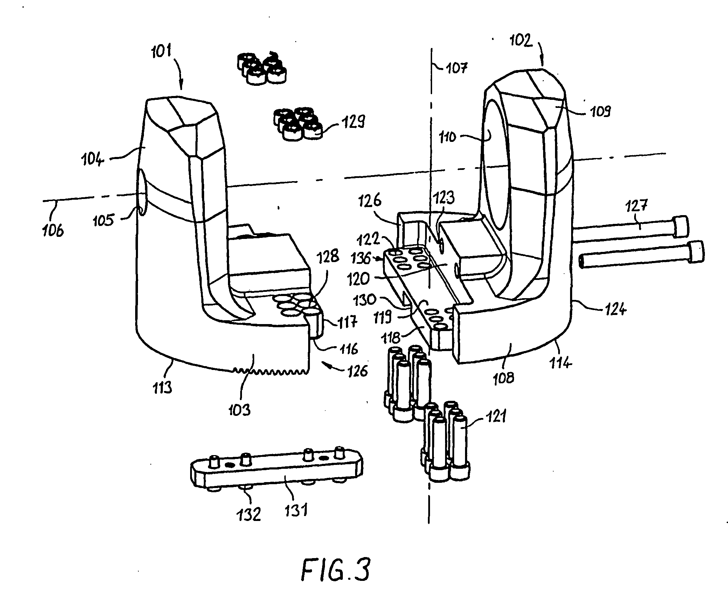

Figur 3 zeigt ein weiteres Ausführungsbeispiel eines Flanschmitnehmers mit einer ersten Mitnehmerhälfte 101 und einer zweiten Mitnehmerhälfte 102 in einer Explosionsdarstellung. Die Bauteile, die mit Bauteilen der Figuren 1 und 2 übereinstimmen, sind mit Bezugszeichen versehen, die um den Wert 100 erhöht sind, und bei den Figuren 1 und 2 beschrieben.

Der Rücksprung in der ersten Trennfläche 126 der ersten Mitnehmerhälfte 101 und der Vorsprung in der zweiten Trennfläche 136 der zweiten Mitnehmerhälfte 102 erstrecken sich in radialer Richtung nicht bis zur Außenumfangsfläche 124. Sie reichen lediglich jeweils bis zu einem Bereich der Trennflächen 126, 136 die von der Außenumfangsfläche 124 ausgehen und auf einer Ebene liegen, die senkrecht zur Bohrungsachse 106 angeordnet ist und entlang der Längsachse 107 verläuft.

Dargestellt sind Befestigungsschrauben 127, die durch die Durchgangsbohrungen 123 des zweiten Mitnehmerteils 102 hindurchgesteckt sind und in Sacklochbohrungen mit Innengewinden in der ersten Mitnehmerhälfte 101 eingeschraubt werden können.

In der ersten Mitnehmerhälfte 101 sind erste Durchgangsbohrungen 128 vorgesehen. Die Befestigungsschrauben 121 werden ausgehend von der zweiten Verbindungsfläche 114 durch die zweiten Durchgangsbohrungen 122 der zweiten Mitnehmerhälfte 102 und durch die ersten Durchgangsbohrungen 128 der ersten Mitnehmerhälfte 101 durchgesteckt und mittels Muttern 129 gesichert.

In der zweiten Stirnfläche 112 ist eine Nut 130 vorgesehen, in der ein Querkeil 131 einsitzt. Die Nut 130 verläuft parallel zur Bohrungsachse 106. Der Querkeil 131 ist mit Schrauben 132 in der Nut 130 befestigt.

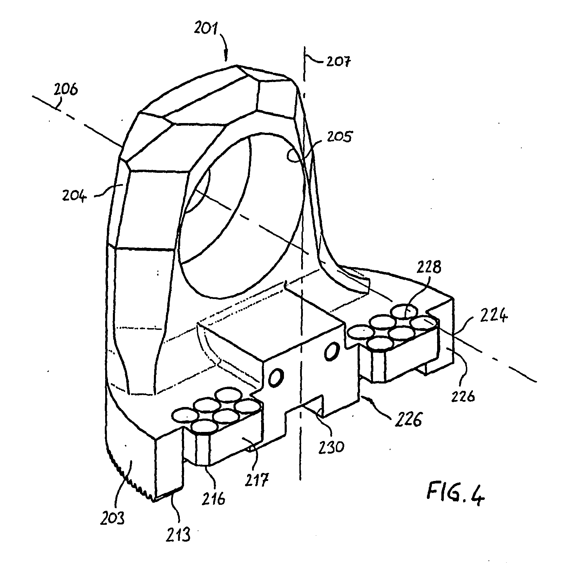

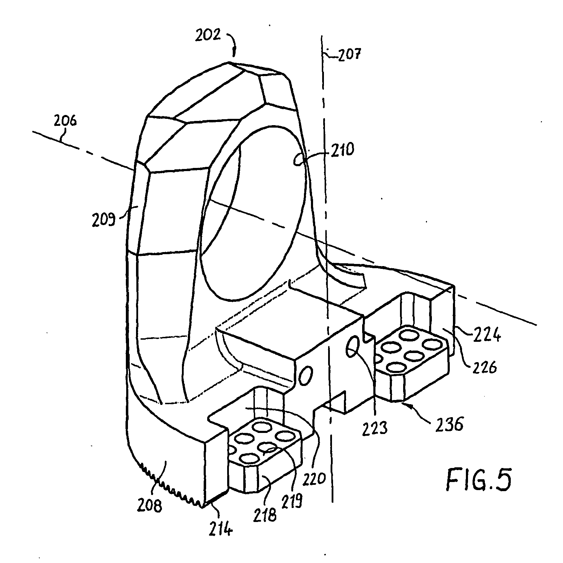

Figur 4 zeigt eine erste Mitnehmerhälfte 201, und Figur 5 zeigt eine zweite Mitnehmerhälfte 202 einer weiteren Ausführungsform eines Flanschmitnehmers. Bauteile, die mit Bauteilen der Figuren 1 und 2 übereinstimmen, sind mit Bezugszeichen versehen, die um den Wert 200 erhöht sind, und bei den Figuren 1 und 2 beschrieben. Bauteile, die mit Bauteilen der Figur 3 übereinstimmen, sind mit Bezugszeichen versehen, die um den Wert 100 erhöht sind, und bei Figur 3 beschrieben. Im folgenden werden die Figuren 4 und 5 zusammen beschrieben.

Die erste Trennfläche 226 der ersten Mitnehmerhälfte 201 weist zwei Rücksprünge auf, die sich in radialer Richtung über einen Teilbereich des Durchmessers des Flanschmitnehmers erstrecken. Die zweite Trennfläche 236 der zweiten Mitnehmerhälfte 202 weist entsprechende Vorsprünge auf, die sich ebenfalls in radialer Richtung lediglich über einen Teilbereich des Durchmessers des Flanschmitnehmers erstrecken.

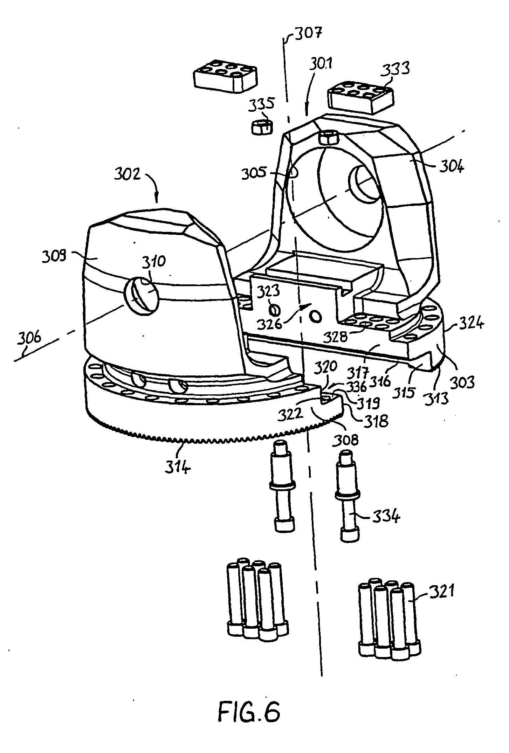

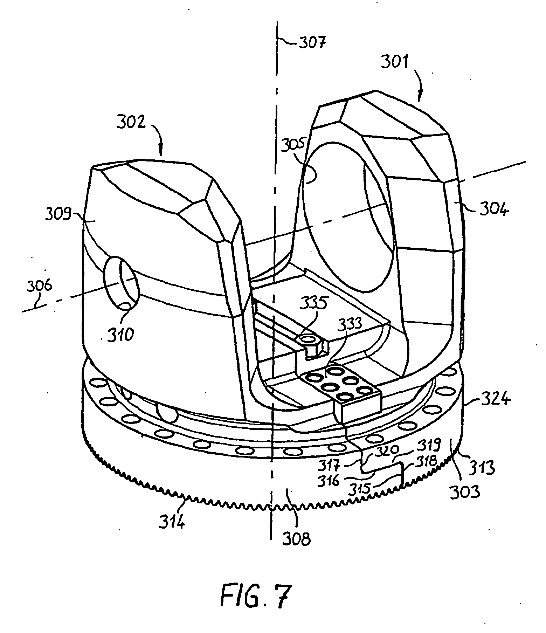

Die Figuren 6 und 7 zeigen eine alternative Ausführung eines Flanschmitnehmers gemäß der Figuren 1 und 2. Übereinstimmende Bauteile sind mit Bezugszeichen versehen, die um den Wert 300 erhöht sind, und sind bei den Figuren 1 und 2 beschrieben.

Die erste Mitnehmerhälfte 301 weist anstelle der Sacklochbohrungen mit Innengewinden erste Durchgangsbohrungen 328 auf. Die Befestigungsschrauben 321 sind ausgehend von der zweiten Verbindungsfläche 314 der zweiten Mitnehmerhälfte 302 durch die zweiten Durchgangsbohrungen 322 sowie durch die ersten Durchgangsbohrungen 328 der ersten Mitnehmerhälfte 301 hindurchgeführt und in Innengewinde von Druckplatten 333 geschraubt. Zwei Druckplatten 333 für jeweils sechs Befestigungsschrauben 321 sind vorgesehen. Die Druckplatten 333 stützen sich gegen die erste Stirnfläche 311 des Flanschmitnehmers ab. Weitere Befestigungsschrauben 334 sind durch Durchgangsbohrungen (nicht dargestellt) der zweiten Mitnehmerhälfte 302 und durch Durchgangsbohrungen (nicht dargestellt) der ersten Mitnehmerhälfte 301 hindurchgesteckt und mit Muttern 335 gesichert.

Der Vorteil der Ausführungsform mit Druckplatten 333 besteht darin, dass bei korrodierten Befestigungsschrauben 321 die Köpfe der Befestigungsschrauben 321 mit einem Brennschneider entfernt werden können und die Druckplatten 333 dann lose auf der ersten Stirnfläche 311 des Flanschmitnehmers aufliegen und samt der Befestigungsschrauben 321 entfernt werden können.

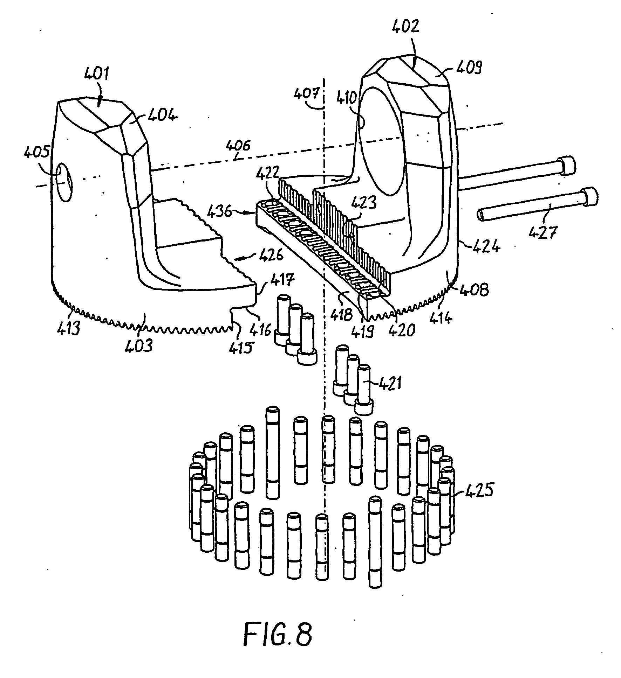

Figur 8 zeigt einen Flanschmitnehmer gemäß Figur 1, wobei übereinstimmende Bauteile mit Bezugszeichen versehen sind, die um den Wert 400 erhöht sind und bei Figur 1 beschrieben sind.

Um Kräfte in der Ebene der ersten Spannfläche 416 und der zweiten Spannfläche 419 übertragen zu können, weist die erste Spannfläche 416 eine Längsverzahnung auf, die komplementär zu einer Längsverzahnung der zweiten Spannfläche 419 ausgebildet ist. Diese Verzahnungen können in Kombination, wie gezeigt, mit Verzahnungen an der ersten Stützfläche 417 und der zweiten Stützfläche 420 vorgesehen sein. Ebenso können die erste Stoßfläche 415 und die zweite Stoßfläche 418 Verzahnungen zur Übertragung von Querkräften aufweisen.

### Bezugszeichenliste

- 1, 101, 201, 301, 401: erste Mitnehmerhälfte
- 2, 102, 202, 302, 402: zweite Mitnehmerhälfte
- 3, 103, 203, 303, 403: erste Flanschplatte
- 4, 104, 204, 304, 404: erster Lagerabschnitt
- 5, 105, 205, 305, 405: erste Lagerbohrung
- 6, 106, 206, 306, 406: Bohrungsachse
- 7, 107, 207, 307, 407: Längsachse
- 8, 108, 208, 308, 408: zweite Flanschplatte
- 9, 109, 209, 309, 409: zweiter Lagerabschnitt
- 10, 110, 210, 310, 410: zweite Lagerbohrung
- 11: erste Stirnfläche
- 12: zweite Stirnfläche
- 13, 113, 213, 313, 413: erste Verbindungsfläche
- 14, 114, 214, 314, 414: zweite Verbindungsfläche
- 15, 315, 415: erste Stoßfläche
- 16, 116, 216, 316, 416: erste Spannfläche
- 17, 117, 217, 317, 417: erste Stützfläche
- 18, 118, 218, 318, 418: zweite Stoßfläche
- 19, 119, 219, 319, 419: zweite Spannfläche
- 20, 120, 220, 320, 420: zweite Stützfläche
- 21, 121, 321, 421: Befestigungsschraube
- 22, 122, 222, 322, 422: zweite Durchgangsbohrung
- 23, 123, 223, 323, 423: Durchgangsbohrung
- 24, 124, 224, 324, 424: Außenumfangsfläche
- 25, 425: Verbindungsschraube
- 26, 126, 226, 326, 426: erste Trennfläche
- 127, 427: Befestigungsschraube
- 128, 228, 328: erste Durchgangsbohrung
- 129: Mutter
- 130, 230: Nut
- 131: Querkeil
- 132: Schraube
- 333: Druckplatte
- 334: Befestigungsschraube
- 335: Mutter
- 36, 136, 236, 336, 436: zweite Trennfläche

## Patentansprüche

1. Flanschmitnehmer für Kreuzgelenke
mit einer Längsachse (7, 107, 207, 307),
mit einer ersten Mitnehmerhälfte (1, 101, 201, 301) und einer zweiten Mitnehmerhälfte (2, 102, 202, 302),
- wobei die erste Mitnehmerhälfte (1, 101, 201, 301) eine erste Trennfläche (26, 126, 226, 326) aufweist, mit der die erste Mitnehmerhälfte (1, 101, 201, 301) in Anlage zu einer zweiten Trennfläche (36, 136, 236, 336) der zweiten Mitnehmerhälfte (2, 102, 202, 302) ist, und
- wobei die erste Mitnehmerhälfte (1, 101, 201, 301) eine erste Flanschplatte (3, 103, 203, 303) und die zweite Mitnehmerhälfte (2, 102, 202, 302) eine zweite Flanschplatte (8, 108, 208, 308) aufweist,
mit einer ersten Stirnfläche (11),
- wobei die erste Mitnehmerhälfte (1, 101, 201, 301) einen ersten Lagerabschnitt (4, 104, 204, 304) mit einer ersten Lagerbohrung (5, 105, 205, 305) aufweist und die zweite Mitnehmerhälfte (2, 102, 202, 302) einen zweiten Lagerabschnitt (9, 109, 209, 309) mit einer zweiten Lagerbohrung (10, 110, 210, 310) aufweist, die jeweils von der ersten Stirnfläche (11) vorstehen,
- wobei die erste Lagerbohrung (5, 105, 205, 305) und die zweite Lagerbohrung (10, 110, 210, 310) auf einer gemeinsamen die Längsachse (7, 107, 207, 307) rechtwinklig schneidenden Bohrungsachse (6, 106, 206, 306) angeordnet sind,
mit einer zweiten Stirnfläche (12), die senkrecht zur Längsachse (7) angeordnet ist, wobei
- die erste Mitnehmerhälfte (1, 101, 201, 301) und die zweite Mitnehmerhälfte (2, 102, 202, 302) mittels Befestigungsschrauben (21, 121, 321) lösbar miteinander verbunden sind,
- die erste Mitnehmerhälfte (1, 101, 201, 301) Sacklochbohrungen mit Innengewinden oder erste Durchgangsbohrungen (128, 228, 328) aufweist, die parallel zur Längsachse (7, 107, 207, 307) verlaufen und die von einer ersten Spannfläche (16, 116, 216, 316) ausgehen,
- jeder Sacklochbohrung oder jeder ersten Durchgangsbohrung (128, 228, 328) eine zweite Durchgangsbohrung (22, 122, 222, 322) in der zweiten Mitnehmerhälfte (2, 102, 202, 302) zugeordnet ist, die ausgehend von einer zweiten Verbindungsfläche (14, 114, 214, 314) in eine zweite Spannfläche (19, 119, 219, 319) mündet, und
- Befestigungsschrauben (21, 121) ausgehend von der zweiten Verbindungsfläche (14, 114, 214) durch die zweiten Durchgangsbohrungen (22, 122, 222) hindurch gesteckt sind und in den Sacklochbohrungen einsitzen oder Befestigungsschrauben (321) ausgehend von der zweiten Verbindungsfläche (314) durch die zweiten Durchgangsbohrungen (322) und durch die ersten Durchgangsbohrungen (328) hindurch gesteckt sind und in Gewindekörpem (335) einsitzen, die sich gegen die erste Stirnfläche (11) des Flanschmitnehmers abstützen,
**dadurch gekennzeichnet,**
**dass** die erste Stirnfläche (11) durch die erste Flanschplatte (3, 103, 203, 303) und die zweite Flanschplatte (8, 108, 208, 308) gebildet ist,
**dass** die zweite Stirnfläche (12) durch eine erste Verbindungsfläche (13, 113, 213, 313) der ersten Mitnehmerhälfte (1, 101, 201, 301) und durch die zweite Verbindungsfläche (14, 114, 214, 314) der zweiten Mitnehmerhälfte (2, 102, 202, 302) gebildet ist,
**dass** die erste Trennfläche (26, 126, 226, 326) der ersten Mitnehmerhälfte (1, 101, 201, 301) zumindest einen stufenartigen Rücksprung aufweist, der ausgehend von der ersten Stirnfläche (11) gebildet ist,
**dass** der Rücksprung der ersten Mitnehmerhälfte (1, 101, 201, 301) durch
- eine erste Stützfläche (17, 117, 217, 317), die von der ersten Stirnfläche (11) ausgehend parallel zur Längsachse (7, 107, 207, 307) verläuft,
- die erste Spannfläche (16, 116, 216, 316), die ausgehend von der ersten Stützfläche (17, 117, 217, 317) die Längsachse (7, 107, 207, 307) senkrecht schneidet, und
- eine erste Stoßfläche (15, 115, 215, 315), die von der ersten Spannfläche (16, 116, 216, 316) in die erste Verbindungsfläche (14, 114, 214, 314) übergeht und die parallel zur Längsachse (7, 107, 207, 307) verläuft, gebildet ist,
**dass** die zweite Trennfläche (36, 136, 236, 336) der zweiten Mitnehmerhälfte (2, 102, 202, 302) zumindest einen komplementär zum Rücksprung ausgebildeten stufenartigen Vorsprung aufweist, und
**dass** der Vorsprung der zweiten Mitnehmerhälfte (2, 102, 202, 302) entsprechend dem Rücksprung durch eine zweite Stützfläche (20, 120, 220, 320), die zweite Spannfläche (19, 119, 219, 319) und eine zweite Stoßfläche (18, 118, 218, 318) gebildet ist, die jeweils mit der entsprechenden Fläche der ersten Mitnehmerhälfte (1, 101, 201, 301) in Anlage sind.

2. Flanschmitnehmer nach Anspruch 1,
**dadurch gekennzeichnet,**
**dass** die Befestigungsschrauben (21, 121, 321) in Form von Dehnschrauben gestaltet sind.

3. Flanschmitnehmer nach einem der Ansprüche 1 oder 2,
**dadurch gekennzeichnet,**
**dass** die Befestigungsschrauben (21, 121, 321) Schraubenenden aufweisen, die in der zweiten Verbindungsfläche (14, 114, 214, 314) versenkt aufgenommen sind.

4. Flanschmitnehmer nach einem der Ansprüche 1 bis 3,
**dadurch gekennzeichnet,**
**dass** in der ersten Mitnehmerhälfte (1, 101, 201, 301) Sacklochbohrungen mit Innengewinde vorgesehen sind, die parallel zur Bohrungsachse (6, 106, 206, 306) verlaufen und die von der ersten Trennfläche (26, 126, 226, 326) ausgehen, und
**dass** jeder Sacklochbohrung eine Durchgangsbohrung (23, 123, 223, 323) in der zweiten Mitnehmerhälfte (2, 102, 202, 302) zugeordnet ist, die parallel zur Bohrungsachse (6, 106, 206, 306) verläuft und die von einer Außenumfangsfläche (24, 124, 224, 324) der zweiten Mitnehmerhälfte (2, 102, 202, 302) ausgehend in die zweite Trennfläche (36, 136, 236, 336) mündet,
wobei Befestigungsschrauben (127) durch die Durchgangsbohrungen hindurch gesteckt sind und in den Sacklochbohrungen einsitzen.

5. Flanschmitnehmer nach einem der Ansprüche 1 bis 4,
**dadurch gekennzeichnet,**
**dass** die erste Stützfläche (17, 117) und die zweite Stützfläche (20, 120) Mittel zum Übertragen von Kräften in der Ebene der Stützflächen (17, 117, 20, 120) aufweisen.

6. Flanschmitnehmer nach Anspruch 5,
**dadurch gekennzeichnet,**
**dass** die erste Stützfläche (17, 117) und die zweite Stützfläche (20, 120) als Mittel zum Übertragen von Kräften jeweils eine Verzahnung aufweisen, die zueinander komplementär ausgebildet sind.

7. Flanschmitnehmer nach Anspruch 6,
**dadurch gekennzeichnet,**
**dass** die Zähne der Verzahnung der ersten Stützfläche (17, 117) und die Zähne der Verzahnung der zweiten Stützfläche (20, 120) parallel zur Längsachse (7, 107) verlaufen.

8. Flanschmitnehmer nach einem der Ansprüche 1 bis 7,
**dadurch gekennzeichnet,**
**dass** die erste Spannfläche (417) und die zweite Spannfläche (420) Mittel zum Übertragen von Kräften in der Ebene der Spannflächen (417, 420) aufweisen.

9. Flanschmitnehmer nach Anspruch 8,
**dadurch gekennzeichnet,**
**dass** die erste Spannfläche (417) und die zweite Spannfläche (420) als Mittel zum Übertragen von Kräften jeweils eine Verzahnung aufweisen, die zueinander komplementär ausgebildet sind.

10. Flanschmitnehmer nach einem der Ansprüche 1 bis 9,
**dadurch gekennzeichnet,**
**dass** in der ersten Verbindungsfläche (113, 213) eine Nut (130, 230) vorgesehen ist, die mit einer entsprechenden Nut in der zweiten Verbindungsfläche (114, 214) fluchtet,
**dass** die Nuten (130, 230) parallel zu der Bohrungsachse (106, 206) verlaufen und
**dass** in den Nuten ein Querkeil (131) einsitzt.

11. Flanschmitnehmer nach einem der Ansprüche 1 bis 10,
**dadurch gekennzeichnet,**
**dass** die erste Verbindungsfläche (13, 113, 213, 313) und die zweite Verbindungsfläche (14, 114, 214, 314) jeweils mit Zentriermitteln zum Zentrieren des Flanschmitnehmers gegenüber einer Längsachse des Gegenflansches aufweisen.

12. Flanschmitnehmer nach Anspruch 11,
**dadurch gekennzeichnet,**
**dass** die Zentriermittel durch Hirth-Stirnverzahnungen gebildet sind.

13. Flanschmitnehmer nach einem der Ansprüche 1 bis 12,
**dadurch gekennzeichnet,**
**dass** ausgehend von der ersten Verbindungsfläche (13, 113, 213) und ausgehend von der zweiten Verbindungsfläche (14, 114, 214) Sacklochbohrungen mit Innengewinden vorgesehen sind, die parallel zur Längsachse (7, 107, 207) verlaufen und in denen die Verbindungsschrauben (25) einsitzen können.

14. Flanschmitnehmer nach einem der Ansprüche 1 bis 12,
**dadurch gekennzeichnet,**
**dass** ausgehend von der ersten Verbindungsfläche (313) und ausgehend von der zweiten Verbindungsfläche (314) Durchgangsbohrungen vorgesehen sind, die parallel zur Längsachse (307) verlaufen und durch die Verbindungsschrauben durchgeführt werden können.

## Claims

1. Flange yoke for universal joints
with a longitudinal axis (7, 107, 207, 307),
with a first yoke half (1, 101, 201, 301) and a second yoke half (2, 102, 202, 302),
- wherein the first yoke half (1, 101, 201, 301) has a first separation face (26, 126, 226, 326), with which the first yoke half (1, 101, 201, 301) abuts a second separation face (36, 136, 236, 336) of the second yoke half (2, 102, 202, 302), and
- wherein the first yoke half (1, 101, 201, 301) has a first flange plate (3, 103, 203, 303) and the second yoke half (2, 102, 202, 302) has a second flange plate (8, 108, 208, 308),
with a first end face (11),
- wherein the first yoke half (1, 101, 201, 301) has a first bearing portion (4, 104, 204, 304) with a first bearing bore (5, 105, 205, 305) and the second yoke half (2, 102, 202, 302) has a second bearing portion (9, 109, 209, 309) with a second bearing bore (10, 110, 210, 310), which respectively project from the first end face (11),
- wherein the first bearing bore (5, 105, 205, 305) and the second bearing bore (10, 110, 210, 310) are arranged on a common bore axis (6, 106, 206, 306), intersecting the longitudinal axis (7, 107, 207, 307) at a right angle,
with a second end face (12), which is arranged at a right angle to the longitudinal axis (7),
wherein
- the first yoke half (1, 101, 201, 301) and the second yoke half (2, 102, 202, 302) are detachably connected to each other by attachment screws (21, 121, 321),
- the first yoke half (1, 101, 201, 301) has blind holes with internal threads or first through bores (128, 228, 328), which extend parallel to the longitudinal axis (7, 107, 207, 307) and extend from a first clamping face (16, 116, 216, 316),
- for each blind hole or each first through hole (128, 228, 328) there is arranged a second through hole (22, 122, 222, 322) in the second yoke half (2, 102, 202, 302), which, starting from a second connection face (14, 114, 214, 314), ends in a second clamping face (19, 119, 219, 319), and
- attachment screws (21, 121) are passed, starting from the second connection face (14, 114, 214), through the second through bores (22, 122, 222) and rest in the blind holes or attachment screws (321) are passed, starting from the second connection face (314), through the second through bores (322) and through the first through bores (328) and rest in threaded members (335), which are supported on the first end face (11) of the flange yoke,
**characterised in**
**that** the first end face (11) is formed by the first flange plate (3, 103, 203, 303) and the second flange plate (8, 108, 208, 308),
**that** the second end face (12) is formed by a first connection face (13, 113, 213, 313) of the first yoke half (1, 101, 201, 301) and by the second connection face (14, 114, 214, 314) of the second yoke half (2, 102, 202, 302),
**that** the first separation face (26, 126, 226, 326) of the first yoke half (1, 101, 201, 301) has at least one step-like recess, which is formed starting from the first end face (11),
**that** the recess of the first yoke half (1, 101, 201, 301) is formed by
- a first support face (17, 117, 217, 317), which extends, starting from the first end face (11), parallel to the longitudinal axis (7, 107, 207, 307),
- the first clamping face (16, 116, 216, 316), which, starting from the first support face (17, 117, 217, 317), intersects the longitudinal axis (7, 107, 207, 307) at a right angle, and
- a first abutment face (15, 115, 215, 315), which, from the first clamping face (16, 116, 216, 316), merges in the first connection face (14, 114, 214, 314) and extends parallel to the longitudinal axis (7, 107, 207, 307),
**that** the second separation face (36, 136, 236, 336) of the second yoke half (2, 102, 202, 302) has at least one step-like projection formed complimentary to the recess, and
**that** the projection of the second yoke half (2, 102, 202, 302) is formed correspondingly to the recess by a second support face (20, 120, 220, 320), the second clamping face (19, 119, 219, 319) and the second abutment face (18, 118, 218, 318), which respectively are abutting the corresponding face of the first yoke half (1, 101, 201, 301).

2. Flange yoke according to claim 1,
**characterised in**
**that** the attachment screws (21, 121, 321) are provided in the form of reduced shaft screws.

3. Flange yoke according to one of claims 1 or 2,
**characterised in**
**that** the attachment screws (21, 121, 321) have screw ends, which are received in a countersunk manner in the second connection face (14, 114, 214, 314).

4. Flange yoke according to one of claims 1 to 3,
**characterised in**
**that** in the first yoke half (1, 101, 201, 301), blind holes with internal thread are provided, which extend parallel to the bore axis (6, 106, 206, 306) and start from the first separation face (26, 126, 226, 326) and
**that** to each blind hole bore a through bore (23, 123, 223, 323) is arranged in the second yoke half (2, 102, 202, 302), which extends parallel to the bore axis (6, 106, 206, 306) and which ends, starting from an outer circumferential face (24, 124, 224, 324) of the second yoke half (2, 102, 202, 302), in the second separation face (36, 136, 236, 336),
wherein attachment screws (127) are passed through the through bores and rest in the blind holes.

5. Flange yoke according to one of claims 1 to 4,
**characterised in**
**that** the first support face (17, 117) and the second support face (20, 120) have means for transmitting forces in the plane of the support faces (17, 117, 20, 120).

6. Flange yoke according to claim 5,
**characterised in**
**that** the first support face (17, 117) and the second support face (20, 120) have as means for transmitting forces respectively a toothing, which are formed complimentary to each other.

7. Flange yoke according to claim 6,
**characterised in**
**that** the teeth of the toothing of the first support face (17, 117) and the teeth of the toothing of the second support face (20, 120) extend parallel to the longitudinal axis (7, 107).

8. Flange yoke according to one of claims 1 to 7,
**characterised in**
**that** the first clamping face (417) and the second clamping face (420) have means for transmitting forces in the plane of the clamping faces (417, 420).

9. Flange yoke according to claim 8,
**characterised in**
**that** the first clamping face (417) and the second clamping face (420) have as means for transmitting forces, respectively, a toothing, which are formed complementary to each other.

10. Flange yoke according to one of claims 1 to 9,
**characterised in**
**that** in the first connection face (113, 213) a groove (130, 230) is provided, which is aligned to a corresponding groove in the second connection face (114,214),
**that** the grooves (130, 230) extend parallel to the bore axis (106, 206) and that in the grooves a cross-wise key (131) rests.

11. Flange yoke according to one of claims 1 to 10,
**characterised in**
**that** the first connection face (13, 113, 213, 313) and the second connection face (14, 114, 214, 314) have, respectively, centring means for centring the flange yoke relative to a longitudinal axis of the counter flange.

12. Flange yoke according to claim 11,
**characterised in that** the centring means are formed by a Hirth-serration.

13. Flange yoke according to one of claims 1 to 12,
**characterised in**
**that,** starting from the first connection face (13, 113, 213) and starting from the second connection face (14, 114, 214), blind holes with internal threads are provided, which extend parallel to the longitudinal axis (7, 107, 207) and in which the connection screws (25) can rest.

14. Flange yoke according to one of claims 1 to 12,
**characterised in**
**that,** starting from the first connection face (313) and starting from the second connection face (314), through bores are provided, which extend parallel to the longitudinal axis (307) and through which the connection screws can be passed.

## Revendications

1. Entraîneur à bride pour articulations en croix
avec un axe longitudinal (7, 107, 207, 307),
avec une première moitié d'entraîneur (1, 101, 201, 301) et une deuxième moitié d'entraîneur (2, 102, 202, 302),
- dans lequel la première moitié d'entraîneur (1, 101, 201, 301) comporte une première surface de séparation (26, 126, 226, 326), avec laquelle la première moitié d'entraîneur (1, 101, 201, 301) est en contact avec une deuxième surface de séparation (36, 136, 236, 336) de la deuxième moitié d'entraîneur (2, 102, 202, 302), et
- dans lequel la première moitié d'entraîneur (1, 101, 201, 301) comporte une première plaque à bride (3, 103, 203, 303) et la deuxième moitié d'entraîneur (2, 102, 202, 302) comporte une deuxième plaque à bride (8, 108, 208, 308),
avec une première surface frontale (11),
- dans lequel la première moitié d'entraîneur (1, 101, 201, 301) comporte une première section de palier (4, 104, 204, 304) avec un premier perçage de palier (5, 105, 205, 305) et la deuxième moitié d'entraîneur (2, 102, 202, 302) comporte une deuxième section de palier (9, 109, 209, 309) avec un deuxième perçage de palier (10, 110, 210, 310), qui font toutes deux saillie sur la première surface frontale (11),
- dans lequel le premier perçage de palier (5, 105, 205, 305) et le deuxième perçage de palier (10, 110, 210, 310) étant disposés sur un axe de perçage (6, 106, 206, 306) commun croisant en angle droit l'axe longitudinal (7, 107, 207, 307),
avec une deuxième surface frontale (12) disposé verticalement à l'axe longitudinal (7),
dans lequel
- la première moitié d'entraîneur (1, 101, 201, 301) et la deuxième moitié d'entraîneur (2, 102, 202, 302) sont reliées entre elles de façon amovible au moyen de vis de fixation (21, 121, 221, 321),
- la première moitié d'entraîneur (1, 101, 201, 301) comporte des perçages borgnes avec des filetages internes ou des premiers perçages traversants (128, 228, 328), qui s'étendent parallèlement à l'axe longitudinal (7, 107, 207, 307) et qui partent d'une première surface de serrage (16, 116, 216, 316),
- à chaque perçage borgne ou à chaque premier perçage traversant (128, 228, 328) est attribué un deuxième perçage traversant (22, 122, 222, 322) dans la deuxième moitié d'entraîneur (2, 102, 202, 302), qui débouche sur une deuxième surface de serrage (19, 119, 219, 319) à partir d'une deuxième surface de liaison (14, 114, 214, 314), et
- des vis de fixation (21, 121) sont introduites dans les deuxièmes perçages traversants (22, 122, 222) à partir de la deuxième surface de liaison (14, 114, 214) et logées dans les perçages borgnes, ou des vis de fixation (321) sont introduites dans les deuxièmes perçages traversants (322) et dans les premiers perçages traversants (328) à partir de la deuxième surface de liaison (314) et logent dans des corps filetés (335) qui s'appuient contre la première surface frontale (11) de l'entraîneur à bride,
**caractérisé en ce que**
la première surface frontale (11) est formée par la première plaque à bride (3, 103, 203, 303) et la deuxième plaque à bride (8, 108, 208, 308),
la deuxième surface frontale (12) est formée par une première surface de liaison (13, 113, 213, 313) de la première moitié d'entraîneur (1, 101, 201, 301) et par la deuxième surface de liaison (14, 114, 214, 314) de la deuxième moitié d'entraîneur (2, 102, 202, 302),
la première surface de séparation (26, 126, 226, 326) de la première moitié d'entraîneur (1, 101, 201, 301) comporte au moins un retrait du genre escalier, formé à partir de la première surface frontale (11),
le retrait de la première moitié d'entraîneur (1, 101, 201, 301) est formé par
- une première surface d'appui (17, 117, 217, 317) qui s'étend à partir de la première surface frontale (11), parallèlement à l'axe longitudinal (7, 107, 207, 307),
- la première surface de serrage (16, 116, 216, 316), qui coupe verticalement l'axe longitudinal (7, 107, 207, 307) à partir de la première surface d'appui (17, 117, 217, 317), et
- une première surface de butée (15, 115, 215, 315) qui passe de la première surface de serrage (16, 116, 216, 316) à la première surface de liaison (14, 114, 214, 314) et s'étend parallèlement à l'axe longitudinal (7, 107, 207, 307),
la deuxième surface de séparation (36, 136, 236, 336) de la deuxième moitié d'entraîneur (2, 102, 202, 302) comporte au moins une saillie du genre escalier, formée de façon complémentaire au retrait, et
la saillie de la deuxième moitié d'entraîneur (2, 102, 202, 302) est formée de façon à correspondre au retrait, par une deuxième surface d'appui (20, 120, 220, 320), la deuxième surface de serrage (19, 119, 219, 319) et une deuxième surface de butée (18, 118, 218, 318), qui s'appliquent respectivement contre la surface correspondante de la première moitié d'entraîneur (1, 101, 201, 301).

2. Entraîneur à bride selon la revendication 1,
**caractérisé en ce que**
les vis de fixation (21, 121, 321) sont conçues comme des vis expansibles.

3. Entraîneur à bride selon l'une des revendications 1 ou 2,
**caractérisé en ce que**
les vis de fixation (21, 121, 321) comportent des extrémités de vis, qui sont admises en étant enfoncées dans la deuxième surface de liaison (14, 114, 214, 314).

4. Entraîneur à bride selon l'une des revendications 1 à 3,
**caractérisé en ce que**
dans la première moitié d'entraîneur (1, 101, 201, 301) sont prévus des perçages borgnes avec un filetage interne, qui s'étendent parallèlement à l'axe de perçage (6, 106, 206, 306) et qui partent de la première surface de séparation (26, 126, 226, 326), et
à chaque perçage borgne est attribué un perçage traversant (23, 123, 223, 323) dans la deuxième moitié d'entraîneur (2, 102, 202, 302), qui s'étend parallèlement à l'axe de perçage (6, 106, 206, 306) et débouche sur la deuxième surface de séparation (36, 136, 236, 336) à partir d'une surface périphérique extérieure (24, 124, 224, 324) de la deuxième moitié d'entraîneur (2, 102, 202, 302),
dans lequel les vis de fixation (127) sont introduites dans les perçages traversants et logées dans les perçages borgnes.

5. Entraîneur à bride selon l'une des revendications 1 à 4,
**caractérisé en ce que**
la première surface d'appui (17, 117) et la deuxième surface d'appui (20, 120) comportent des moyens pour la transmission de forces dans la région des surfaces d'appui (17, 117, 20, 120).

6. Entraîneur à bride selon la revendication 5,
**caractérisé en ce que**
la première surface d'appui (17, 117) et la deuxième surface d'appui (20, 120) comportent chacune une denture en tant que moyens pour la transmission de forces conçus de façon réciproquement complémentaire.

7. Entraîneur à bride selon la revendication 6,
**caractérisé en ce que**
les dents de la denture de la première surface d'appui (17, 117) et les dents de la denture de la deuxième surface d'appui (20, 120) s'étendent de façon parallèle à l'axe longitudinal (7, 107).

8. Entraîneur à bride selon l'une des revendications 1 à 7,
**caractérisé en ce que**
la première surface de serrage (417) et la deuxième surface de serrage (420) comportent des moyens pour la transmission de forces dans la région des surfaces de serrage (417, 420).

9. Entraîneur à bride selon la revendication 8,
**caractérisé en ce que**
la première surface de serrage (417) et la deuxième surface de serrage (420) comportent chacune une denture pour la transmission de forces, les dentures étant formées de façon réciproquement complémentaire.

10. Entraîneur à bride selon l'une des revendications 1 à 9,
**caractérisé en ce que**
dans la première surface de liaison (113, 213) est prévue une rainure (130, 230), qui est alignée avec une rainure correspondante dans la deuxième surface de liaison (114, 214),
les rainures (130, 230) s'étendent parallèlement à l'axe de perçage (106, 206) et
une clavette transversale (131) loge dans les rainures.

11. Entraîneur à bride selon l'une des revendications 1 à 10,
**caractérisé en ce que**
la première surface de liaison (13, 113, 213, 313) et la deuxième surface de liaison (14, 114, 214, 314) comportent chacune des moyens de centrage pour le centrage de l'entraîneur à bride par rapport à un axe longitudinal de la contre-bride.

12. Entraîneur selon la revendication 11,
**caractérisé en ce que**
les moyens de centrage sont formés par des dentures frontales de Hirth.

13. Entraîneur selon l'une des revendications 1 à 12,
**caractérisé en ce que**
à partir de la première surface de liaison (13, 113, 213) et de la deuxième surface de liaison (14, 114, 214) sont prévus des perçages borgnes avec des filetages internes, qui s'étendent parallèlement à l'axe longitudinal (7, 107, 207) et dans lesquels peuvent être logées les vis de liaison (25).

14. Entraîneur selon l'une des revendications 1 à 12,
**caractérisé en ce que**
à partir de la première surface de liaison (313) et de la deuxième surface de liaison (314) sont prévus des perçages traversants, qui s'étendent parallèlement à l'axe longitudinal (307) et dans lesquels peuvent être introduites les vis de liaison.
